(19) Europäisches Patentamt
European Patent Office
Office européen des brevets

(11) **EP 4 708 950 A1**

(12) **EUROPEAN PATENT APPLICATION**
published in accordance with Art. 153(4) EPC

(43) Date of publication:
**11.03.2026 Bulletin 2026/11**

(21) Application number: **23944691.7**

(22) Date of filing: **12.07.2023**

(51) International Patent Classification (IPC):
*H04W 24/02* (2009.01)

(52) Cooperative Patent Classification (CPC):
**H04W 24/02**

(86) International application number:
**PCT/CN2023/107066**

(87) International publication number:
**WO 2025/010671 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HU, Rongyi**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **MEASUREMENT ADJUSTMENT METHOD, TERMINAL DEVICE, AND NETWORK DEVICE**

(57) The present application relates to a measurement adjustment method, a terminal device, a network device, a chip, a computer readable storage medium, a computer program product, and a computer program. The measurement adjustment method comprises: when a first condition is satisfied, a terminal device adjusts an SMTC used for measurement of a plurality of satellites or cells and/or first information corresponding to the SMTC, wherein the first condition is related to the plurality of satellites or cells, and the adjustment comprises autonomous adjustment by the terminal device or adjustment according to a network configuration. Embodiments of the present application can adapt to movement characteristics of different satellites and then implement measurement.

When a first condition is satisfied, a terminal device adjusts an SMTC and/or first information corresponding to the SMTC for measurements of multiple satellites or cells — S310

**FIG. 3**

EP 4 708 950 A1

**Description**

TECHNICAL FIELD

The disclosure relates to the field of communications, and particularly to methods for measurement adjustment, a terminal device, a network device, a chip, a computer-readable storage medium, a computer program product, and a computer program.

BACKGROUND

In a Non-Terrestrial Network (NTN) system, a propagation distance from a satellite to a terminal device is long and the propagation distances from different satellites may vary greatly. Therefore, reference signals transmitted by the satellites, such as synchronization signal and PBCH blocks (SSBs), may arrive at the terminal device at different times, making it impossible to measure all satellites using the same SSB measurement timing configuration (SMTC). Accordingly, it is necessary to consider how to adapt measurements for different satellites or associated cells.

SUMMARY

An embodiment of the disclosure provides a method for measurement adjustment, including the following operation.

A terminal device adjusts an SMTC and/or first information corresponding to the SMTC for measurements of a plurality of satellites or cells, when a first condition is satisfied. The first condition is associated with the plurality of satellites or cells, and the adjustment includes an autonomous adjustment by the terminal device or an adjustment based on a network configuration.

An embodiment of the disclosure provides a method for measurement adjustment, including the following operation.

A network device transmits second information. The second information enables a terminal device to adjust an SMTC and/or first information corresponding to the SMTC for measurements of a plurality of satellites or cells.

An embodiment of the disclosure provides a terminal device, including a first processing module.

The first processing module is configured to adjust an SMTC and/or first information corresponding to the SMTC for measurements of a plurality of satellites or cells when a first condition is satisfied. The first condition is associated with the plurality of satellites or cells, and the adjustment includes an autonomous adjustment by the terminal device or an adjustment based on a network configuration.

An embodiment of the disclosure provides a network device, including a first communication module.

The first communication module is configured to transmit second information. The second information enables a terminal device to adjust an SMTC and/or first information corresponding to the SMTC for measurements of a plurality of satellites or cells.

An embodiment of the disclosure provides a terminal device, including a processor and a memory. The memory is configured to store a computer program. The processor is configured to call the computer program stored in the memory and run the computer program to cause the terminal device to perform the foregoing method for measurement adjustment.

An embodiment of the disclosure provides a network device, including a processor and a memory. The memory is configured to store a computer program. The processor is configured to call the computer program stored in the memory and run the computer program to cause the network device to perform the foregoing method for measurement adjustment.

An embodiment of the disclosure provides a chip, including a processor. The processor is configured to call a computer program from a memory and run the computer program, to cause a device installed with the chip to implement the foregoing methods for measurement adjustment.

An embodiment of the disclosure provides a computer-readable storage medium for storing a computer program that, when run by a device, causes the device to implement the foregoing methods for measurement adjustment.

An embodiment of the disclosure provides a computer program product including computer program instructions that cause a computer to execute the foregoing methods for measurement adjustment.

An embodiment of the disclosure provides a computer program that causes a computer to execute the foregoing methods for measurement adjustment when the computer program is run by the computer.

In the embodiments of the disclosure, when the first condition is satisfied, the terminal device can adjust the SMTC or the first information corresponding to the SMTC for measurements of multiple satellites or cells, thereby enabling the measurement to adapt to the mobility characteristics of different satellites.

BRIEF DESCRIPTION OF THE DRAWINGS

FIG. 1 is a schematic diagram of a communication system according to an embodiment of the disclosure.
FIG. 2 is a schematic diagram of an application scenario according to an embodiment of the disclosure.
FIG. 3 is a schematic flowchart of a method for measurement adjustment according to an embodiment of the disclosure.
FIG. 4 is a schematic flowchart of a method for measurement adjustment according to another embodiment of the disclosure.
FIG. 5 is a schematic block diagram of a terminal device according to an embodiment of the disclosure.
FIG. 6 is a schematic block diagram of a network device according to an embodiment of the disclosure.
FIG. 7 is a schematic block diagram of a communication device according to an embodiment of the disclosure.
FIG. 8 is a schematic block diagram of a chip according to an embodiment of the disclosure.
FIG. 9 is a schematic block diagram of a communication system according to an embodiment of the disclosure.

DETAILED DESCRIPTION

The technical solutions in the embodiments of the disclosure will be described with reference to the accompanying drawings in the embodiments of the disclosure.

The technical solutions in the embodiments of the disclosure may be applied to various communication systems, such as: a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, an NTN system, a universal mobile telecommunication system (UMTS), a wireless local area network (WLAN), a wireless fidelity (WiFi), a 5th-generation (5G) system, a 6th-generation (6G) system or other communication systems, etc.

Generally, the number of connections supported by a traditional communication system is limited and the connections are easy to be implemented. However, with the development of the communication technology, a mobile communication system will not only support traditional communications, but also support direct terminal-to-terminal communications such as, a device to device (D2D) communication, a machine to machine (M2M) communication, a machine type communication (MTC), a vehicle to vehicle (V2V) communication, or a vehicle to everything (V2X) communication, etc. The embodiments of the disclosure may also be applied to these communication systems.

In an implementation, the communication system in the embodiments of the disclosure may be applied to a carrier aggregation (CA) scenario, a dual connectivity (DC) scenario, and may also be applied to a standalone (SA) network deployment scenario.

In an implementation, the communication system in the embodiments of the disclosure may be applied to an unlicensed spectrum. The unlicensed spectrum may also be considered to be a shared spectrum. Alternatively, the communication system in the embodiments of the disclosure may also be applied to a licensed spectrum. The licensed spectrum may also be considered to be an unshared spectrum.

Various embodiments are described in combination with a network device and a terminal device in the embodiments of the disclosure. The terminal device may also be called user equipment (UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a station (ST) in the WLAN, and may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, a vehicle-mounted device, a wearable device, a terminal device in a next generation communication system such as the NR network, or a terminal device in a future evolved public land mobile network (PLMN) or the like.

In the embodiments of the disclosure, the terminal device may be deployed on land, including indoors or outdoors, as hand-held, wearable or vehicle-mounted devices; or may be deployed on water surfaces (such as on ships) or underwater (such as on submarines); or may be deployed in the air (such as on airplanes, balloons and satellites).

In the embodiments of the disclosure, the terminal device may be a mobile phone, a tablet computer (pad), a computer with a wireless transceiver function, a virtual reality (VR) terminal device, an augmented reality (AR) terminal device, a terminal device in a personal internet of things (PIoT), a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, or a wireless terminal device in a smart home, etc.

By way of example but not limitation, in the embodiments of the disclosure, the terminal device may be a wearable device. The wearable device may also be referred to as a wearable smart device, which is a general name of wearable devices developed by applying wearable technology and intelligently designing daily wearable items, such as glasses, gloves, watches, clothing and shoes. The wearable device is a portable device that is worn directly on the body or integrated into the clothes or accessories of a user. The wearable device is not only a hardware device, but also can realize powerful functions through software support, data interaction and cloud interaction. Broadly defined, the wearable smart devices include those with comprehensive functions, large sizes and an ability to perform whole or partial functions independently of a smart phone, such as a smart watch or smart glasses, as well as those focused on specific application functions that require integration with another device like the smart phone, such as various smart bracelets and smart jewelry for monitoring vital signs.

In the embodiments of the disclosure, the network device may be a device for communicating with the mobile device. The network device may be an access point (AP) in the WLAN, an Evolutional Node B (eNB or eNodeB) in the LTE, a relay station or an AP, a vehicle-mounted device, a wearable device, a network device (gNB) in the NR network, a network device in the future evolved PLMN or a network device in the NTN, etc.

By way of example and not limitation, in the embodiments of the disclosure, the network device may have a mobility characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In the embodiments of the disclosure, the network device may provide services for a cell, and the terminal device communicates with the network device through transmission resources (e.g. frequency-domain resources or called spectrum resources) utilized by the cell. The cell may be a cell corresponding to the network device such as a base station. The cell may belong to a macro base station or to a base station corresponding to a small cell. Herein, the small cell may include: a metro cell, a micro cell, a pico cell, a femto cell, etc. These small cells have the characteristics of small coverage and low transmission power, and are suitable for providing high-speed data transmission services.

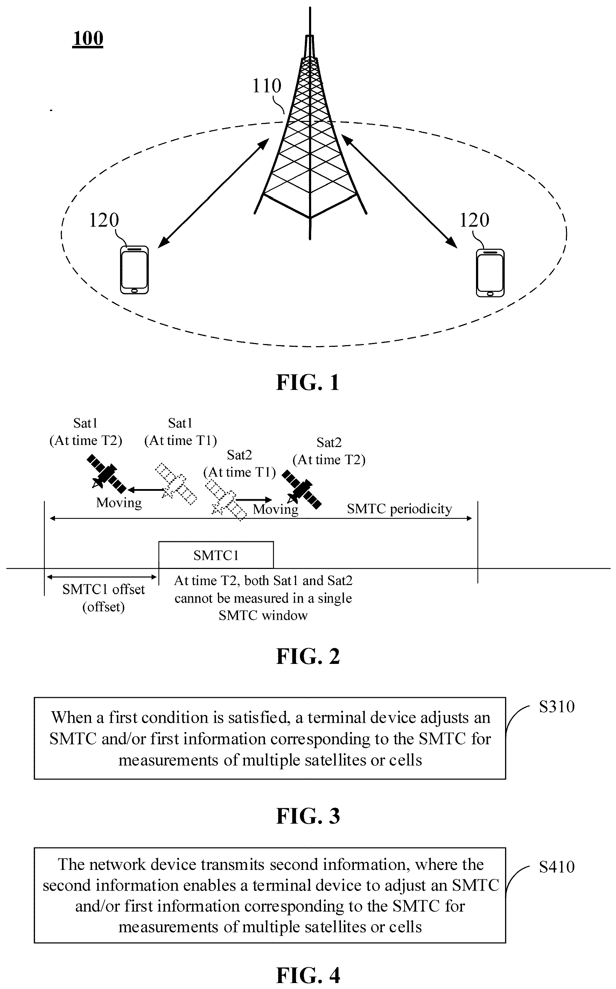

FIG. 1 illustrates a communication system 100 by way of example. The communication system includes a network device 110 and two terminal devices 120. In a possible implementation, the communication system 100 may include a plurality of network devices 110 and each network device 110 may cover a different number of terminal devices 120, which is not limited in the embodiments of the disclosure.

It should be understood that, terms "system" and "network" are usually used interchangeably in the disclosure. The term "and/or" herein is only used to describe an association relationship between associated objects, and represents that three relationships may exist. For example, A and/or B may represent three conditions: independent existence of A, existence of both A and B and independent existence of B. In addition, the character "/" in the disclosure usually represents that previous and next associated objects form an "or" relationship.

It should also be understood that the word "indication" mentioned in the embodiments of the disclosure may refer to a direct indication or an indirect indication, and may also be indicative of an association. For example, A indicates B, which may represent that A directly indicates B, for example, B may be obtained through A; or that A indirectly indicates B, for example, A indicates C, and B may be obtained through C; or that there is an association between A and B.

The term "correspondence" described in the embodiments of the disclosure may represent that the listed items have a direct or indirect correspondence relationship, or an association relationship, or a relationship of indicating and being indicated, configuring and being configured, etc.

For ease of understanding the technical solutions in the embodiments of the disclosure, related technologies in the embodiments of the disclosure are described below. The following related technologies, used as optional solutions, may be combined with the technical solutions in the embodiments of the disclosure in various ways. Such combinations shall fall within the scope of protection of the embodiments of the disclosure.

(1) SMTC

In NR, a set of configuration information (i.e., the SMTC) for a measurement time window is introduced into SSB measurement. Usually, the SMTC includes information such as a periodicity, an offset and duration of the time window. The SMTC is configured per frequency point, and a set of SMTC information is configured for each measurement frequency point. Thus, UE may determine a time window, available for measurement, corresponding to the frequency point based on the information. In order to match different SSB periods of different cells, this restriction has been relaxed subsequently, and two SMTCs may be allowed to be configured for the same frequency point. For example, an additional SMTC with a denser pattern (i.e., a smaller periodicity but the same offset and duration) is configured for the same measurement frequency point, to measure severing cells and specific cells, thereby speeding up the measurement. Specifically, the cells to be measured by the SMTC may be indicated via a list, which is a physical cell identity (PCI) list (pci-List) associated with the SMTC in an SMTC information element (SSB-MTC information element).

The SMTC in the NTN is more complicated. Considering that the propagation distance from the satellite to the UE is long and the propagation distances from different satellites may vary greatly, the reference signals (e.g., SSBs) transmitted by the satellites may arrive at the UE at different times, making it impossible to measure all satellites through a single SMTC. Therefore, multiple SMTCs are also introduced in the NTN (the newly introduced SMTC is denoted as SSB-MTC4). The multiple SMTCs have the same periodicity and duration, and differ only in their offsets. Additionally, each SMTC is associated with a list (e.g., pci-List), which indicates the IDs (identifiers) of the target cells to be measured by the SMTC.

Currently, in NTN systems, up to four SMTCs may be configured per frequency point, including one legacy SSB-MTC and up to three SSB-MTC4s. The offset of each SSB-MTC4 is based on an assumption that a service link propagation delay difference between a serving cell and neighbor cells equals to 0 ms, but in practice, the propagation delay difference exists between the serving cell and the neighbor cells, and the UE may adjust an actual offset based on the actual propagation delay difference. In a radio resource control (RRC) connected state, the network may obtain location information of the UE, and calculate the propagation delay based on a distance between the UE and the cell (satellite) to be measured, thereby configuring or updating the accurate SMTC offset. However, in the RRC idle/inactive state, the UE has not yet accessed the network, the network cannot obtain the location information of the UE in real time, and thus the UE is allowed to determine the SMTC offset based on the actual propagation delay.

(2) Effect of SMTC on measurement time

Compared with a terrestrial network (TN), configuring multiple SMTCs in NTN may impact a time required for neighbor cell measurement. The following Table 1 illustrates the time required for detecting, measuring, or evaluating the neighbor cell in the idle/inactive state, using intra-frequency as an example.

Table 1

| Discontinuous reception (DRX) cycle length | Scaling factor (N1) | Detection time $T_{detect,NR\_Intra}$ [s] (number of DRX cycles) | Measurement time $T_{measure,NR\_Intra}$ [s] (number of DRX cycles) | Evaluation time $T_{evaluate,NR\_Intra}$ [s] (number of DRX cycles) |
| --- | --- | --- | --- | --- |
| | FR1 | | | |
| 0.32 | | 11.52 x N1 x M2 (36 x N1 x M2) | 1.28 x N1 x M2 (4 x N1 x M2) | 5.12 x N1 x M2 (16 x N1 x M2) |
| 0.64 | 1 | 17.92 x N1 (28 x N1) | 1.28 x N1 (2 x N1) | 5.12 x N1 (8 x N1) |
| 1.28 | | 32 x N1 (25 x N1) | 1.28 x N1 (1 x N1) | 6.4 x N1 (5 x N1) |
| 2.56 | | 58.88 x N1 (23 x N1) | 2.56 x N1 (1 x N1) | 7.68 x N1 (3 x N1) |

Note 1: M2 = 2 if SMTC periodicity of measured intra-frequency cell > 20 ms and $1 < N_{SMTC} \leq 4$ upon more than 1 SMTC configured at the UE; M2 = 1.5 if SMTC periodicity of measured intra-frequency cell > 20 ms and $N_{gSMTC}$=1 upon 1 SMTC configured at the UE; otherwise M2=1. Where, $N_{SMTC}$ is the number of SMTCs configured by SAN. If different SMTC periodicities are configured for different cells, the SMTC periodicity in this note is the one used by the cell being identified. During PSS/SSS detection, the periodicity of the SMTC configured for the intra-frequency carrier is assumed, and if the actual SSB transmission periodicity is greater than the SMTC configured for the intra-frequency carrier, longer $T_{detect,NR\_Intra}$ is expected.

Note 2: The UE is not required to meet the requirements for 2.56s DRX cycle length for earth-moving LEO deployment.

On this basis, the scaling factor $K_{multi\_SMTC}$ is also introduced. For example, the detection time is $T_{detect,NR\_Intra}$ illustrated in Table 1 multiplied by $K_{multi-SMTC}$. The measurement time and evaluation time are similar to the detection time.

$K_{multi\_SMTC}$ is the scaling factor for measurements of multiple SMTCs which correspond to different satellites.

In case that multiple SMTCs do not overlap with each other, if GEO satellites are measured on the carrier, then $K_{multi\_SMTC}$ = 1; and if LEO satellites are measured on the carrier, then $K_{\mathrm{multi\_SMTC}} = \left\lceil \dfrac{N_{LEO,i}}{N_{LEO,simul}} \right\rceil$.

In case that multiple SMTCs partially overlap with each other, if only the GEO satellites are measured on the carrier, then $K_{multi\_SMTC} = N_{SMTC,ove\ ap}$; and if only the LEO satellites are measured on the carrier, then

$$K_{\mathrm{multi\_SMTC}} = \sum_{i=1}^{N_{SMTC,overlap}} \left\lceil \frac{N_{LEO,i}}{N_{LEO,simul}} \right\rceil.$$

Herein, $N_{LEO,i}$ is the number of LEO satellites to be measured within the i-th SMTC, $N_{LEO,simul}$ is the number of LEO satellites that the UE can measure in parallel within an SMTC, and $N_{SMTC,overlap}$ is the number of SMTCs that partially overlap with each other.

As previously explained, in the NTN system, to ensure that an SMTC can follow the mobility of its associated satellites during the neighbor cell measurement, the UE may adjust the actual offset based on the propagation delay difference of the satellite (i.e., adjusting the offset of the SMTC). However, when one SMTC window is associated with multiple satellites, different mobility characteristics of these satellites may lead to different offsets for the measurement window, that is, a direction or step size of the SMTC offset may vary. For example, it's unclear to decide which direction on time domain shall the SMTC window shift if the SMTC window is associated with multiple satellites. As illustrated in FIG. 2, if two satellites (Sat1 and Sat2) are on the same carrier and one single SMTC is configured on that carrier, but the Sat1 and Sat2 are moving on opposite directions, it's unclear which direction shall the SMTC window shifting follow. In other words, the same offset cannot satisfy the measurements for both Sat1 and Sat2.

Based on this, it is necessary to consider how to adapt measurements to different mobility characteristics of different satellites or associated cells when an SMTC is associated with multiple satellites.

FIG. 3 is a schematic flowchart of a method for measurement adjustment according to an embodiment of the disclosure. This method may optionally be applied to, but is not limited to, the system illustrated in FIG. 1. The method includes at least part of the following contents.

At S310, when a first condition is satisfied, a terminal device adjusts an SMTC and/or first information corresponding to the SMTC for measurements of a plurality of satellites or cells. The first condition is associated with the plurality of satellites or cells, and the adjustment includes an autonomous adjustment by the terminal device or an adjustment based on a network configuration.

The SMTC in the operation S310 is used for measurements of multiple satellites or cells. In some embodiments, the SMTC is used for measurements of multiple satellites, that is, the SMTC is associated with multiple satellites. In some other embodiments, the SMTC is used for measurements of multiple cells, that is, the SMTC is associated with multiple cells. Herein, the cell has a mapping relationship with the satellite, that is, the cell is a cell in the NTN system, and a network device in the cell may include a satellite. For example, the mapping relationship between the cells and the satellites may be one-to-one, many-to-one, or one-to-many. That is, the mapping relationship between the cells and the satellites may be: one cell corresponding to one satellite, two or more cells corresponding to the same satellite, or one cell corresponding to multiple satellites. As can be understood, since there is a mapping relationship between a cell and a satellite, even when multiple cells are associated with the same SMTC, there is a problem that measurements cannot be performed based on the same SMTC offset as described in the foregoing description.

In some embodiments, the first condition may be related to mobility characteristics, such as mobility directions, or mobility speeds of multiple satellites or cells (i.e., multiple satellites or multiple cells). Alternatively, the first condition may be related to the indication/configuration of the network device for multiple satellites or cells. Herein, the network device may also indicate/configure the mobility characteristics of the multiple satellites or cells. Exemplarily, the first condition may be a condition characterizing that the multiple satellites or cells cannot all be measured within the aforementioned SMTC, or cannot be measured based on the same offset of the SMTC.

According to the foregoing method, when the first condition is satisfied, the terminal device adjusts the SMTC and/or the first information corresponding to the SMTC for measurements of multiple satellites or cells, which can overcome the problem that measurements cannot be performed based on the same SMTC or the same SMTC offset when multiple satellites or cells are associated with the same SMTC, and is advantageous to realize the measurements adapted to the mobility characteristics of different satellites.

According to the foregoing embodiment, the terminal device may adjust the SMTC for measurements of multiple satellites or cells. Optionally, the terminal device may adjust the SMTC for measurements of multiple satellites or cells from a first SMTC to a second SMTC. Alternatively, when multiple satellites or cells are associated with the first SMTC, the satellite(s) or cell(s) among the multiple satellites or cells that cannot be measured within the first SMTC may be switched to be measured within the second SMTC. In other words, the terminal device may shift among the multiple configured SMTCs for all or part of the multiple satellites or cells.

In some embodiments, the terminal device may also adjust the first information corresponding to the SMTC. Herein, the first information includes one or more of: configuration information of the SMTC; an offset of the SMTC when measuring a first satellite or first cell; one or more satellites or cells associated with the SMTC; or a satellite or cell to be measured among the plurality of satellites or cells associated with the SMTC.

Exemplarily, the first information may include the configuration information of the SMTC. That is, the terminal device may adjust the configuration information of the SMTC for measuring the multiple satellites or cells. Optionally, the configuration information may at least include a periodicity of the SMTC and/or a duration of the SMTC. Specifically, an association between the multiple satellites or cells and the SMTC may be maintained, and the configuration information of the SMTC may be adjusted. For example, it is assumed that four SMTCs are configured in advance, including one legacy SMTC and three SSB-MTC4s, where the second SSB-MTC4 is associated with multiple satellites or cells. When the first condition is satisfied, the multiple satellites or cells are still associated with the second SSB-MTC 4, but the configuration information of the second SSB-MTC 4 may be adjusted.

Exemplarily, the first information may include the offset of the SMTC when measuring the first satellite or the first cell. The first satellite may be one of the multiple satellites, and the first cell may be one of the multiple cells. That is, for the same SMTC associated with the multiple satellites or cells, the terminal device may adjust/shift the offset when measuring a certain satellite or a certain cell based on the SMTC. Exemplarily, the terminal device may use different offsets for different satellites or different cells. This method may be regarded as maintaining the association between the multiple satellites or cells and the SMTC, while adjusting the secondary association between a respective satellite or cell and the SMTC offset.

Exemplarily, the first information may include one or more satellites or cells associated with the SMTC. That is, the terminal device may adjust the one or more satellites or cells associated with the SMTC based on the association between the multiple satellites or cells and the same SMTC. For example, one or more satellites may be deleted from the satellite list associated with the SMTC, or one or more cells may be deleted from the cell list associated with the SMTC. The deleted satellite(s) or cell(s) may be one whose reference signal deviates from the SMTC beyond a threshold, or one whose reference signal measurement result (e.g., a reference signal receiving power (RSRP) and/or a reference signal receiving quality (RSRQ)) exceeds a measurement threshold. Accordingly, one or more satellites in the satellite list associated with another SMTC may be added to the satellite list associated with the current SMTC, or one or more cells in the cell list associated with another SMTC may be added to the cell list associated with the current SMTC. This method may be regarded as adjusting the association between the SMTC and the satellite or cell.

Exemplarily, the first information may include a satellite or cell to be measured among the multiple satellites or cells associated with the SMTC. Herein, the satellite to be measured is a satellite actually to be measured, and the cell to be measured is a cell actually to be measured. That is, the terminal device may adjust which satellite or cell is actually to be measured among the multiple satellites or cells associated with the SMTC. For example, only the satellite or cell with a high priority is measured, or only a portion of the satellites or cells that can be matched with the SMTC are measured.

It should be noted that, the first information may include a combination of two or more pieces of the above information. For example, the first information includes the configuration information of the SMTC and one or more satellites or cells associated with the SMTC, in other words, both the configuration information of the SMTC and the association between the SMTC and the satellite or cell are adjusted. The embodiments of the disclosure do not limit the manner in which the above information is combined, and in practical applications, the combination manner may be flexibly set according to scenario requirements, protocol agreements, system agreements, or the like, which are not exhaustively listed herein.

According to the above embodiments, the terminal device may apply one or more adjustment methods to adapt to different moving directions and speeds of multiple satellites, thereby improving the flexibility of the adjustment and ensuring that the terminal device completes the measurement.

In some embodiments, the method for measurement adjustment may further include that: the terminal device determines whether the first condition is satisfied by detecting information associated with the multiple satellites or cells; and/or the terminal device determines whether the first condition is satisfied based on second information received from a network device.

In other words, the first condition may be associated with autonomous detection results for multiple satellites or cells by the terminal device. For example, the first condition may be associated with detection results of the terminal device concerning mobility directions, speeds, ephemeris positions, or SSBs of the multiple satellites or cells. Alternatively, the first condition may be associated with the second information transmitted by the network device for the multiple satellites or cells. For example, the first condition may be associated with ephemeris information broadcast by the network device, or with indication information or configuration information transmitted by the network device.

In some embodiments, the first condition includes a dynamic SMTC shifting condition. Specifically, the first condition may be a dynamic SMTC shifting condition pre-defined in the system or defined in the protocol, and the terminal device may directly determine whether to adjust the SMTC or the first information corresponding to the SMTC based on the pre-defined dynamic SMTC shifting condition without concerning specific condition settings.

In some embodiments, the first condition may include at least one of the following. The terminal device detects that the multiple satellites or cells are operating out of synchronization; the terminal device detects that speeds of the multiple satellites or cells are different; the terminal device detects a change in an ephemeris position of at least one of the multiple satellites or cells; the terminal device fails to detect an SSB from at least one of the multiple satellites or cells; the terminal device determines, according to ephemeris information in received broadcast information, that at least one of the multiple satellites or cells is unable to be measured based on the SMTC; or the terminal device receives first indication information from a network device, and the first indication information indicates the terminal device to adjust the SMTC and/or the first information corresponding to the SMTC for measurements of the multiple satellites or cells.

It should be noted that, at least one of the multiple satellites or cells refers to one or more of the multiple satellites or one or more of the multiple cells.

Exemplarily, the first condition may include that: the terminal device detects that the multiple satellites or cells are operating out of synchronization or at different speeds or that the ephemeris position of the at least one of the multiple satellites or cells changes. In such a case, the terminal device may determine that at least one of the multiple satellites or cells cannot be measured within the currently configured SMTC, i.e., the multiple satellites or cells cannot all be measured within the currently configured SMTC, then the terminal device may adjust the SMTC or the first information corresponding to the SMTC for measurements of the multiple satellites or cells, to enable the terminal device to adaptively complete the measurement.

Exemplarily, the first condition may include that: the terminal device fails to detect an SSB from at least one of the multiple satellites or cells. In such a case, the terminal device may determine that at least one of the satellites or cells cannot be measured, and then the terminal device may adjust the SMTC or the first information corresponding to the SMTC.

Exemplarily, the first condition may include that: the terminal device determines, according to the ephemeris information in the received broadcast information, that at least one of the multiple satellites or cells is unable to be measured based on the SMTC. For example, the terminal device infers, based on the ephemeris information, a change in the propagation link, resulting in one or more satellites no longer satisfying the conditions for measurement within the currently configured SMTC. In other words, the terminal device may determine whether the multiple satellites or cells all satisfy the conditions for measurement within the currently configured SMTC based on the information transmitted by the network device, without determining whether the multiple satellites or cells satisfy the conditions for measurement within the currently configured SMTC by autonomous detection.

Exemplarily, the first condition may include that: the terminal device receives the first indication information from the network device, and the first indication information indicates the terminal device to adjust the SMTC and/or the first information corresponding to the SMTC for measurements of the multiple satellites or cells. That is to say, the terminal device may adjust the SMTC and/or the first information corresponding to the SMTC based on the indication or configuration of the network device. The first indication information may be transmitted by the network device when determining that the multiple satellites or cells cannot all be measured within the currently associated SMTC.

It should be noted that the first condition may include a combination of two or more of the above conditions. For example, the first condition may include that: the terminal device detects that the multiple satellites or cells are operating out of synchronization, and the terminal device receives the first indication information. The terminal device needs to adjust the SMTC or the first information corresponding the SMTC when detecting that the multiple satellites or cells are operating out of synchronization and receiving an indication from the network device. The embodiments of the disclosure do not limit the manner in which the above conditions are combined, and in practical applications, the combination manner may be flexibly set according to scenario requirements, protocol agreements, system agreements, or the like, which are not exhaustively listed herein.

Optionally, the first condition may be set based on an RRC state of the terminal device.

Specifically, in some embodiments, when the terminal device is in an idle state or an inactive state, the first condition includes at least one of the following. The terminal device detects that the multiple satellites or cells are operating out of synchronization; the terminal device detects that speeds of the multiple satellites or cells are different; the terminal device detects a change in an ephemeris position of at least one of the multiple satellites or cells; the terminal device fails to detect an SSB from at least one of the multiple satellites or cells; or the terminal device determines, according to ephemeris information in received broadcast information, that at least one of the multiple satellites or cells is unable to be measured based on the SMTC.

That is to say, when the terminal device is in an idle state (IDLE) or an inactive state, the terminal device may determine whether the first condition is satisfied by an active detection or through the ephemeris information broadcast by the network, to determine whether to adjust the SMTC or the first information corresponding to the SMTC. Accordingly, the terminal device may perform the autonomous adjustment. Exemplarily, the terminal device may perform the adjustment based on the actual propagation delay. In this way, the terminal device can adapt the measurements to the mobility characteristics of the multiple satellites or cells even in the RRC idle/inactive state.

In some embodiments, when the terminal device is in a connected state, the first condition includes at least one of the following. The terminal device detects that the multiple satellites or cells are operating out of synchronization; the terminal device detects that speeds of the multiple satellites or cells are different; the terminal device detects a change in an ephemeris position of at least one of the multiple satellites or cells; the terminal device fails to detect an SSB from at least one of the multiple satellites or cells; the terminal device determines, according to ephemeris information in received broadcast information, that at least one of the multiple satellites or cells is unable to be measured based on the SMTC; or the terminal device receives first indication information from a network device, and the first indication information indicates the terminal device to adjust the SMTC and/or the first information corresponding to the SMTC for measurements of the multiple satellites or cells.

That is to say, when the terminal device is in the connected state, the terminal device may determine whether the first condition is satisfied by an active detection, or through the ephemeris information broadcast by the network, or by an indication from the network, to determine whether to adjust the SMTC or the first information corresponding to the SMTC. Accordingly, the terminal device may perform the autonomous adjustment or may perform the adjustment based on the indication/configuration from the network device. Optionally, the first indication information transmitted by the network device may be determined based on location information of the terminal device.

According to the above embodiments, in the RRC connected state, since the network device can obtain the location information of the UE and calculate the propagation delay based on a distance between the UE and a respective satellite or cell, the SMTC or the first information corresponding to the SMTC can be configured or updated more accurately.

In some embodiments, the first indication information includes one or more of: configuration information of the SMTC; an association between an offset and a satellite or cell; an association between the SMTC and a satellite or cell; an adjusted SMTC for measuring a second satellite or second cell among the multiple satellites or cells; or a priority of a third satellite or third cell among the multiple satellites or cells.

Exemplarily, the first indication information may include the configuration information of the SMTC. Here, the configuration information of the SMTC may include one or more of an adjusted duration, an adjusted periodicity, or an adjusted offset of the SMTC, or alternatively, one or more of a target duration, a target periodicity, or a target offset of the SMTC. Accordingly, the terminal device may adjust the configuration information of the SMTC for measurements of multiple satellites or cells based on the first indication information.

Exemplarily, the first indication information may include an association between the offset and the satellite or cell. Specifically, the first indication information may include an SMTC offset for a single satellite or cell. That is, the network device may configure the terminal device to maintain the association between multiple satellites or cells and the SMTC, and adjust a secondary association between a respective satellite or cell and the SMTC offset.

Exemplarily, the first indication information may include an association between the SMTC and the satellite or cell. That is, the network device may configure the terminal device to adjust the association. Specifically, the first indication information may indicate one or more satellites or cells associated with the SMTC, or may indicate multiple satellites or cells to be associated with another SMTC. Thus, the terminal device may adjust the SMTC with which the multiple satellites or cells are associated or adjust one or more satellites or cells associated with the SMTC based on the first indication information.

Exemplarily, the first indication information may include an adjusted SMTC for measuring a second satellite or second cell among the multiple satellites or cells. The second satellite may be any one of the multiple satellites, and the second cell may be any one of the multiple cells. Specifically, the first indication information may indicate the terminal device to adjust satellite(s) or cell(s) that cannot be measured within the current SMTC to be measured based on another SMTC, that is, to adjust the SMTC with which one or more of the multiple satellites or cells are associated.

Exemplarily, the first indication information may include a priority of a third satellite or third cell among the multiple satellites or cells. The third satellite may be any one of the multiple satellites, and the third cell may be any one of the multiple cells. Optionally, the first indication information may indicate a priority of each of the multiple satellites or cells associated with the SMTC, and the terminal device may determine the satellite or cell to be measured based on the first indication information.

It should be noted that, the first indication information may include a combination of two or more pieces of the above-described information. For example, the first indication information may include the configuration information of the SMTC and the priority of a respective satellite or cell, then the terminal device may adjust the configuration information of the SMTC and determine the satellite(s) or cell(s) to be measured (only this part of the satellites or cells are measured). The embodiments of the disclosure do not limit the manner in which the above information is combined, and in practical applications, the combination manner may be flexibly set according to scenario requirements, protocol agreements, system agreements, or the like, which are not exhaustively listed herein.

As described above, the terminal device may autonomously adjust the satellite(s) or cell(s) to be measured among the multiple satellites or cells or adjust the satellite(s) or cell(s) to be measured among the multiple satellites or cells based on the indication/configuration from the network device. For example, only the satellite or cell with a high priority is measured, or only the satellite or cell that can be matched with the associated SMTC is measured. In some embodiments of the disclosure, the measurement time may also be adjusted based on the number of the satellites or cells to be measured. Specifically, in some embodiments, the method for measurement adjustment may further include the following operations.

The terminal device determines, based on the first information, the number of satellites or cells to be measured among the multiple satellites or cells.

The terminal device determines a measurement time based on the number.

The terminal device measures the satellites or cells to be measured based on the measurement time.

Herein, the measurement time may be a duration of a measurement window determined based on a sampling requirement, an SMTC periodicity, the number of measurement objects, the number of SMTCs, or the like for measurement. For example, the measurement time may be $T_{measure,NR\_Intra}$ in the aforementioned related technologies. According to the embodiments of the disclosure, the terminal device may adjust the satellites or cells to be measured, determine the measurement time based on the number of the satellites or cells to be measured (for example, the measurement time is determined based on the number and the information associated with the adjusted SMTC), and measure the satellites or cells to be measured based on the measurement time, instead of measuring all satellites or cells associated with the SMTC. In this way, the measurement time requirement for the terminal device can be satisfied.

In some other embodiments, the method for measurement adjustment may further include the following operations.

The terminal device increases the measurement time for the multiple satellites or cells.

The terminal device measures the multiple satellites or cells based on the first information and the measurement time.

Exemplarily, the terminal device may increase the measurement time for the multiple satellites or cells by increasing a correlation coefficient (e.g., the coefficient M related to the SMTC configuration in the aforementioned related technologies) for calculating the measurement time. The measurement time requirement for the terminal device can be satisfied by lengthening the measurement time to measure multiple satellites or cells.

In order to facilitate understanding of the above-described technical solutions, application examples of the embodiments of the disclosure are provided below for different RRC states.

First application example

This application example involves a SMTC dynamic shifting in the IDLE or inactive state. Specifically, the trigger condition for the SMTC dynamic shifting in the IDLE or inactive state includes the following alternative condition.

1. The UE detects that multiple satellites or cells associated with an SMTC are operating out of synchronization or at different speeds, or an ephemeris position changes.
2. The UE monitors that a "dynamic SMTC shifting" condition is satisfied (for example, the "dynamic SMTC shifting" condition is that the UE fails to detect an SSB from a satellite that is expected to be measurable).
3. The UE receives the broadcast ephemeris information of the satellites and infers that the change in the propagation link causes some satellites to fail to satisfy conditions for measurement within the currently configured SMTC.

It should be understood that, in some embodiments, the UE in the IDLE or inactive state is different from the UE in the connected state in that the UE in the IDLE or inactive state may autonomously adjust the SMTC offset but cannot receive the re-measurement configuration from the network.

When a UE satisfying the above-described trigger condition measures the multiple satellites or cells, the measurement behavior of the UE may be one of the following.

1. The UE shifts the SMTC configuration for measurement of the satellite/cell (including at least the SMTC duration and periodicity) based on the association between the satellite or cell ID and the SMTC configuration in the measurement configuration, to satisfy the adjusted measurement time requirement.
2. The UE adjusts/switches the association between the satellite or cell ID (associated with the same SMTC) and the actual SMTC offset for measurement in the measurement configuration. The offset in the association may be a pre-configured enumeration value, such as +5ms, +3ms, -3ms, -5ms, or may be an empirical value recommended by the network or the UE. After switching the association, the UE continues to use the SMTC and the offset to measure the satellite/cell, to satisfy the adjusted measurement time requirement.
3. The UE adjusts/switches the association between the satellite or cell ID and the SMTC in the measurement configuration, and adds or removes some satellites or cells (such as cells or satellites whose offset deviations exceed the threshold or exceed a certain RSRP measurement threshold). After adjusting or switching the association, the UE continues to use the SMTC and the offset to perform the measurement for the associated satellites/cells after updating, to satisfy the adjusted measurement time requirement.

Herein, the measurement time requirement may include the following requirements.

1. A measurement time requirement required for the UE to only measure the part of the satellites or cells with high priority or that can be matched with the SMTC.
2. A measurement time requirement required for the UE to measure all associated satellites or cells whenever possible, which may be achieved by lengthening the measurement time.

Second application example

This application example involves a SMTC dynamic shifting in the connected state. Specifically, in the connected state, when the UE receives the signaling configured by the network (such as the first indication information in the above-described embodiments, which may be an SMTC shifting instruction or a priority indication for measurement of the cell/satellite), or when the UE satisfies the trigger condition in the above-described first application example, the UE may perform the SMTC dynamic shifting.

Herein, the SMTC parameter configured or reconfigured by the network includes at least one of the following parameters.

1. SMTC offset, and/or SMTC duration, and/or SMTC periodicity.
2. An association between the SMTC and a satellite or cell.
3. A secondary association between the SMTC offset and the cell or satellite.
4. A SMTC to be shifted for satellite(s) or cell(s) that cannot be measured within the currently associated SMTC, that is, this part of the satellites or cells is measured within the SMTC to be shifted (which is equivalent to configuring or reconfiguring the association).
5. Priority for measurement of the cells or satellites.

When the UE receives the signaling configured by the network or the UE satisfies the trigger condition in the above-described first application example, the measurement behavior of the UE may be that: when measuring multiple satellites, the UE determines which satellites/cells to measure based on the adjusted SMTC parameter 1, the switched association for the SMTC or SMTC offset (parameters 2-4), or the measurement priority (parameter 5), to satisfy the adjusted measurement time requirement.

Herein, the measurement time requirement may be a time requirement for measuring only cells/satellites with high priority or specified associated cells/satellites, or a measurement time requirement for measuring all configured satellites or cells (the time is longer than that before adjustment, and may be lengthened according to the scaling factor).

For example, the measurement behavior of the UE may include one of the following.

1. When the UE receives the signaling configured by the network or satisfies the trigger condition in the first application example, the UE adjusts the SMTC configuration (including at least the SMTC duration and periodicity) for measurements of the satellites/cells based on the reconfigured SMTC offset, and/or the reconfigured SMTC duration, and/or the reconfigured SMTC periodicity, to satisfy the adjusted measurement time requirement.

2. When the UE receives the signaling configured by the network or satisfies the trigger condition in the first application example, the UE switches the SMTC configuration (including at least the SMTC duration and periodicity) for measurements of the satellites/cells based on the reconfigured association between the satellite or cell IDs and the SMTC configuration, to satisfy the adjusted measurement time requirement.

3. When the UE receives the signaling configured by the network or satisfies the trigger condition in the first application example, the UE adjusts/switches the SMTC offset actually used for measurement of the satellite or cell associated with the same SMTC in the measurement configuration according to the reconfigured association between the SMTC offsets and the cells or satellites. After switching the association, the UE uses the SMTC and the new offsets to measure the satellites/cells, to satisfy the adjusted measurement time requirement.

4. When the UE receives the signaling configured by the network or satisfies the trigger condition in the first application example, the UE adjusts satellites/cells that cannot be measured within the currently associated SMTC, and these satellites/cells are switched to be measured within another configured SMTC (switching the association). For example, the UE adds or removes some satellites or cells (such as cells or satellites whose offset deviations exceed the threshold or exceed a certain RSRP measurement threshold). After adjusting or switching the association, the UE continues to use the SMTC and the offsets to measure the associated satellites/cells after updating, to satisfy the adjusted measurement time requirement.

As can be seen, the embodiments of the disclosure provide a method for measurement adjustment, which includes a SMTC dynamic adjustment scheme, and optionally, may further include a scheme for determining the corresponding measurement time. According to the method in the embodiments of the disclosure, measurements can be adapted to the mobility characteristics of the multiple satellites or cells.

An embodiment of the disclosure further provides a method for measurement adjustment performed by a network device. FIG. 4 is a schematic flowchart of a method for measurement adjustment according to another embodiment of the disclosure. The method may optionally be applied to, but is not limited to, the system illustrated in FIG. 1. The method includes at least part of the following contents.

At S410, the network device transmits second information. The second information enables a terminal device to adjust an SMTC and/or first information corresponding to the SMTC for measurements of multiple satellites or cells.

In some embodiments, the second information may indicate the terminal device how to adjust the SMTC and/or the first information corresponding to the SMTC for measurements of the multiple satellites or cells. Specifically, the second information includes first indication information for indicating at least one of: configuration information of the SMTC; an association between an offset and a satellite or cell; an association between the SMTC and a satellite or cell; an adjusted SMTC for measuring a second satellite or second cell among the multiple satellites or cells; or a priority of a third satellite or third cell among the multiple satellites or cells.

In some embodiments, the second information may be used for the terminal device to determine whether a first condition is satisfied, thereby adjusting the SMTC and/or the first information corresponding to the SMTC for measurements of the multiple satellites or cells. Specifically, the second information includes ephemeris information broadcasted by the network device, and the ephemeris information is used by the terminal device to determine whether the first condition is satisfied, to adjust the SMTC and/or the first information corresponding to the SMTC when the first condition is satisfied.

The technical details in the foregoing embodiment may refer to the description in the above-described embodiments, and have corresponding beneficial effects, which will not be repeatedly described here.

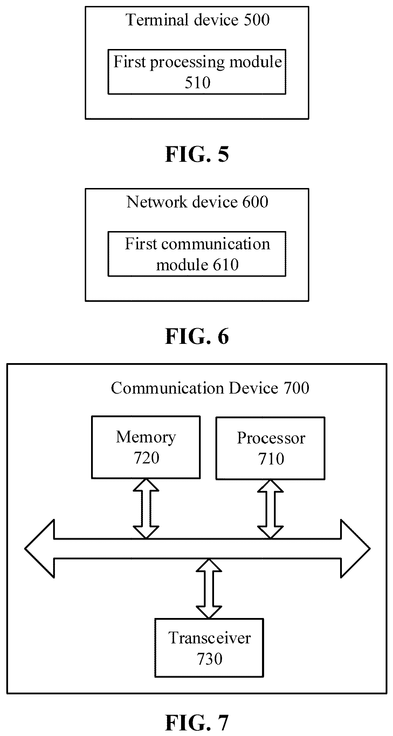

FIG. 5 is a schematic block diagram of a terminal device 500 according to an embodiment of the disclosure. The terminal device 500 includes a first processing module 510.

The first processing module 510 is configured to adjust an SMTC and/or first information corresponding to the SMTC for measurements of multiple satellites or cells when a first condition is satisfied. The first condition is associated with the multiple satellites or cells, and the adjustment includes an autonomous adjustment by the terminal device or an adjustment based on a network configuration.

In an implementation, the first information includes one or more of: configuration information of the SMTC; an offset of the SMTC when measuring a first satellite or a first cell; one or more satellites or cells associated with the SMTC; or a satellite or cell to be measured among the multiple satellites or cells associated with the SMTC.

In an implementation, the first processing module 510 is further configured to: determine whether the first condition is satisfied by detecting information associated with the multiple satellites or cells; and/or determine whether the first condition is satisfied based on second information received from a network device.

In an implementation, the first condition includes a dynamic SMTC shifting condition.

In an implementation, the first condition includes at least one of: detecting that the multiple satellites or cells are operating out of synchronization; detecting that speeds of the multiple satellites or cells are different; detecting a change in an ephemeris position of at least one of the multiple satellites or cells; failing to detect an SSB from at least one of the multiple satellites or cells; determining, according to ephemeris information in received broadcast information, that at least one of the multiple satellites or cells is unable to be measured based on the SMTC; or receiving first indication information from a network device, the first indication information indicating the terminal device to adjust the SMTC and/or the first information corresponding to the SMTC for measurements of the multiple satellites or cells.

In an implementation, when the terminal device is in an idle state or an inactive state, the first condition includes at least one of: detecting that the multiple satellites or cells are operating out of synchronization; detecting that speeds of the multiple satellites or cells are different; detecting a change in an ephemeris position of at least one of the multiple satellites or cells; failing to detect an SSB from at least one of the multiple satellites or cells; or determining, according to ephemeris information in received broadcast information, that at least one of the multiple satellites or cells is unable to be measured based on the SMTC.

In an implementation, when the terminal device is in a connected state, the first condition includes at least one of: detecting that the multiple satellites or cells are operating out of synchronization; detecting that speeds of the multiple satellites or cells are different; detecting a change in an ephemeris position of at least one of the multiple satellites or cells; failing to detect an SSB from at least one of the multiple satellites or cells; determining, according to ephemeris information in received broadcast information, that at least one of the multiple satellites or cells is unable to be measured based on the SMTC; or receiving first indication information from a network device, the first indication information indicating the terminal device to adjust the SMTC and/or the first information corresponding to the SMTC for measurements of the multiple satellites or cells.

In an implementation, the first indication information includes one or more of: configuration information of the SMTC; an association between an offset and a satellite or cell; an association between the SMTC and a satellite or cell; an adjusted SMTC for measuring a second satellite or second cell among the multiple satellites or cells; or a priority of a third satellite or third cell among the multiple satellites or cells.

In an implementation, the first processing module 510 is further configured to: determine a number of satellites or cells to be measured among the multiple satellites or cells based on the first information; determine a measurement time based on the number; and measure the satellites or cells to be measured based on the measurement time.

In an implementation, the first processing module 510 is further configured to: increase a measurement time for the multiple satellites or cells; and measure the multiple satellites or cells based on the first information and the measurement time.

The terminal device 500 according to the embodiment of the disclosure may implement the functions corresponding to the terminal device in the above-described method embodiments. The process, function, implementation, and beneficial effect corresponding to each module (sub-module, unit, component, etc.) in the terminal device 500 may refer to the corresponding description in the above-described method embodiments, and will not be repeatedly described here. It should be noted that the function described with respect to each module (sub-module, unit or component, etc.) in the terminal device 500 in the embodiments of the disclosure may be implemented by different modules (sub-modules, units or components, etc.) or by the same module (sub-module, unit or component, etc.).

FIG. 6 is a schematic block diagram of a network device 600 according to an embodiment of the disclosure. The network device 600 includes a first processing module 610.

The first processing module 610 is configured to adjust an SMTC and/or first information corresponding to the SMTC for measurements of multiple satellites or cells when a first condition is satisfied. The first condition is associated with the multiple satellites or cells, and the adjustment includes an autonomous adjustment by the terminal device or an adjustment based on a network configuration.

In an implementation, the second information includes first indication information for indicating at least one of: configuration information of the SMTC; an association between an offset and a satellite or cell; an association between the SMTC and a satellite or cell; an adjusted SMTC for measuring a second satellite or second cell among the multiple satellites or cells; or a priority of a third satellite or third cell among the multiple satellites or cells.

In an implementation, the second information includes ephemeris information broadcasted by the network device, and the ephemeris information is used by the terminal device to determine whether a first condition is satisfied, to adjust the SMTC and/or the first information corresponding to the SMTC when the first condition is satisfied.

The network device 600 according to the embodiment of the disclosure may implement the functions corresponding to the network device in the above-described method embodiments. The process, function, implementation, and beneficial effect corresponding to each module (sub-module, unit, component, etc.) in the network device 600 may refer to the corresponding description in the above-described method embodiments, and will not be repeatedly described here. It should be noted that the function described with respect to each module (sub-module, unit or component, etc.) in the network device 600 in the embodiments of the disclosure may be implemented by different modules (sub-modules, units or components, etc.) or by the same module (sub-module, unit or component, etc.).

FIG. 7 is a schematic diagram of a structure of a communication device 700 according to an embodiment of the disclosure. The communication device 700 includes a processor 710, and the processor 710 may call a computer program from a memory and run the computer program to cause the communication device 700 to implement the methods in the embodiments of the disclosure.

In an implementation, the communication device 700 may further include a memory 720. Herein, the processor 710 may call the computer program from the memory 720 and run the computer program to cause the communication device 700 to implement the methods in the embodiments of the disclosure.

The memory 720 may be a separate device independent of the processor 710 or may be integrated into the processor 710.

In an implementation, the communication device 700 may further include a transceiver 730. The processor 710 may control the transceiver 730 to communicate with other devices. Specifically, the transceiver 730 may transmit information or data to other devices or receive information or data transmitted by other devices.

The transceiver 730 may include a transmitter and a receiver. The transceiver 730 may further include antennas, and the number of the antennas may be one or more.

In an implementation, the communication device 700 may be the terminal device in the embodiments of the disclosure, and the communication device 700 may implement corresponding processes implemented by the terminal device in the various methods according to the embodiments of the disclosure, which is not repeated herein for sake of brevity.

In an implementation, the communication device 700 may be the network device in the embodiments of the disclosure, and the communication device 700 may implement corresponding processes implemented by the network device in the various methods according to the embodiments of the disclosure, which is not repeated herein for sake of brevity.

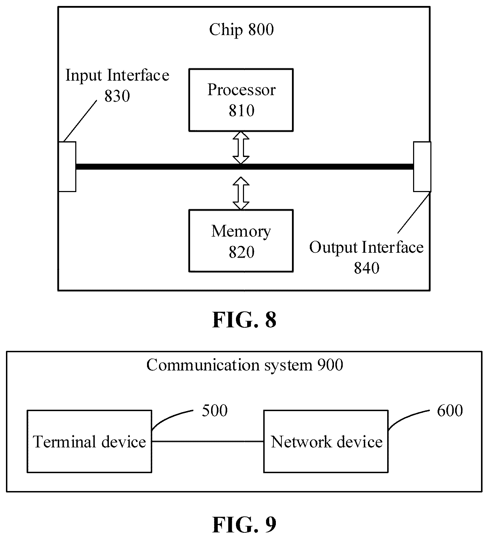

FIG. 8 is a schematic diagram of a structure of a chip 800 according to an embodiment of the disclosure. The chip 800 includes a processor 810. The processor 810 may call a computer program from a memory and run the computer program to implement the methods in the embodiments of the disclosure.

In an implementation, the chip 800 may further include a memory 820. The processor 810 may call the computer program from the memory 820 and run the computer program to implement the methods performed by the terminal device in the embodiments of the disclosure.

The memory 820 may be a separate device independent of the processor 810 or may be integrated into the processor 810.

In an implementation, the chip 800 may further include an input interface 830. The processor 810 may control the input interface 830 to communicate with other devices or chips, and in particular to obtain information or data transmitted by other devices or chips.

In an implementation, the chip 800 may further include an output interface 840. The processor 810 may control the output interface 840 to communicate with other devices or chips, and in particular to output information or data to other devices or chips.

In an implementation, the chip may be applied to the terminal device in the embodiments of the disclosure, and the chip may implement the corresponding processes implemented by the terminal device in various methods according to the embodiments of the disclosure, which is not repeated herein for sake of brevity.

In an implementation, the chip may be applied to the network device in the embodiments of the disclosure, and the chip may implement the corresponding processes implemented by the network device in various methods according to the embodiments of the disclosure, which is not repeated herein for sake of brevity.

It should be noted that the chip mentioned in the embodiments of the disclosure may also be referred to as a system level chip, a system chip, a chip system, a system on chip, or the like.

The processor mentioned above may be a general-purpose processor, a digital signal processor (DSP), a field programmable gate array (FPGA), an application specific integrated circuit (ASIC), or other programmable logic devices, transistor logic devices, discrete hardware components or the like. The above general-purpose processor may be a microprocessor or any conventional processor or the like.

The memory mentioned above may be a volatile memory or a non-volatile memory, or may include both a volatile and a non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be noted that the memory described above is exemplary, but not limiting. For example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memory in the embodiments of the disclosure is intended to include, but is not limited to, these and any other suitable type of memories.

FIG. 9 is a schematic block diagram of a communication system 900 according to an embodiment of the disclosure. The communication system 900 includes a terminal device 500.

The terminal device 500 is configured to adjust an SMTC and/or first information corresponding to the SMTC for measurements of multiple satellites or cells when a first condition is satisfied. The first condition is associated with the multiple satellites or cells, and the adjustment includes an autonomous adjustment by the terminal device or an adjustment based on a network configuration.

In some embodiments, the communication system 900 further includes a network device 600. The network device 600 is configured to transmit second information, where the second information enables the terminal device to adjust the SMTC and/or the first information corresponding to the SMTC for measurements of the multiple satellites or cells.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with the embodiments of the disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a web site, a computer, a server, or a data center to another web site, computer, server, or data center through a wired (e.g., a coaxial cable, an optical fiber, a digital subscriber line (DSL)) or wireless (e.g., an infrared, a wireless, a microwave, etc.) manner. The computer-readable storage medium may be any available medium accessible to a computer or a data storage device such as a server, a data center, or the like that integrated with one or more available mediums. The available medium may be a magnetic medium (e.g., a floppy disk, a hard disk, a magnetic tape), an optical medium (e.g., a digital versatile disc (DVD)), or a semiconductor medium (e.g., a solid state disk (SSD)), etc.

It should be understood that in various embodiments of the disclosure, an order of the serial numbers of the above-mentioned processes does not imply an execution order, the execution order of various processes is determined based on their functions and inherent logics, and should not constitute any limitation on the implementation process of the embodiments of the disclosure.

It may be clearly understood by those skilled in the art that, for the purpose of convenient and brief description, the detailed working processes of the foregoing systems, apparatuses, and units may refer to the corresponding processes in the foregoing method embodiments, and details are not elaborated herein again.

The foregoing descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

**Claims**

1.  A method for measurement adjustment, comprising:
    adjusting, by a terminal device, when a first condition is satisfied, a synchronization signal and PBCH block (SSB) measurement timing configuration (SMTC) and/or first information corresponding to the SMTC for measurement of a plurality of satellites or cells, wherein the first condition is associated with the plurality of satellites or cells, and the adjustment comprises an autonomous adjustment by the terminal device or an adjustment based on a network configuration.

2.  The method of claim 1, wherein the first information comprises one or more of:

    configuration information of the SMTC;
    an offset of the SMTC when measuring a first satellite or a first cell;
    one or more satellites or cells associated with the SMTC; or
    a satellite or cell to be measured among the plurality of satellites or cells associated with the SMTC.

3.  The method of claim 1 or 2, further comprising:

    determining, by the terminal device, whether the first condition is satisfied by detecting information associated with the plurality of satellites or cells; and/or
    determining, by the terminal device, whether the first condition is satisfied based on second information received from a network device.

4.  The method of any one of claims 1 to 3, wherein the first condition comprises a dynamic SMTC shifting condition.

5.  The method of any one of claims 1 to 4, wherein the first condition comprises at least one of:

    the terminal device detects that the plurality of satellites or cells are operating out of synchronization;
    the terminal device detects that speeds of the plurality of satellites or cells are different;
    the terminal device detects a change in an ephemeris position of at least one of the plurality of satellites or cells;
    the terminal device fails to detect an SSB from at least one of the plurality of satellites or cells;
    the terminal device determines, according to ephemeris information in received broadcast information, that at least one of the plurality of satellites or cells is unable to be measured based on the SMTC; or
    the terminal device receives first indication information from a network device, the first indication information indicating the terminal device to adjust the SMTC and/or the first information corresponding to the SMTC for measurement of the plurality of satellites or cells.

6.  The method of any one of claims 1 to 5, wherein when the terminal device is in an idle state or an inactive state, the first condition comprises at least one of:

    the terminal device detects that the plurality of satellites or cells are operating out of synchronization;
    the terminal device detects that speeds of the plurality of satellites or cells are different;
    the terminal device detects a change in an ephemeris position of at least one of the plurality of satellites or cells;
    the terminal device fails to detect an SSB from at least one of the plurality of satellites or cells; or
    the terminal device determines, according to ephemeris information in received broadcast information, that at least one of the plurality of satellites or cells is unable to be measured based on the SMTC.

7.  The method of any one of claims 1 to 6, wherein when the terminal device is in a connected state, the first condition comprises at least one of:

    the terminal device detects that the plurality of satellites or cells are operating out of synchronization;
    the terminal device detects that speeds of the plurality of satellites or cells are different;
    the terminal device detects a change in an ephemeris position of at least one of the plurality of satellites or cells;
    the terminal device fails to detect an SSB from at least one of the plurality of satellites or cells;
    the terminal device determines, according to ephemeris information in received broadcast information, that at least one of the plurality of satellites or cells is unable to be measured based on the SMTC; or
    the terminal device receives first indication information from a network device, the first indication information indicating the terminal device to adjust the SMTC and/or the first information corresponding to the SMTC for measurement of the plurality of satellites or cells.

8.  The method of claim 5 or 7, wherein the first indication information comprises one or more of:

    configuration information of the SMTC;
    an association between an offset and a satellite or cell;
    an association between the SMTC and a satellite or cell;
    an adjusted SMTC for measuring a second satellite or second cell among the plurality of satellites or cells; or
    a priority of a third satellite or third cell among the plurality of satellites or cells.

9.  The method of any one of claims 1 to 8, further comprising:

    determining, by the terminal device, based on the first information, a number of satellites or cells to be measured among the plurality of satellites or cells;
    determining, by the terminal device, a measurement time based on the number; and
    measuring, by the terminal device, the satellites or cells to be measured based on the measurement time.

10. The method of any one of claims 1 to 8, further comprising:

    increasing, by the terminal device, a measurement time for the plurality of satellites or cells; and
    measuring, by the terminal device, the plurality of satellites or cells based on the first information and the measurement time.

11. A method for measurement adjustment, comprising:
    transmitting, by a network device, second information, wherein the second information enables a terminal device to adjust a synchronization signal and PBCH block (SSB) measurement timing configuration (SMTC) and/or first information corresponding to the SMTC for measurement of a plurality of satellites or cells.

12. The method of claim 11, wherein the second information comprises first indication information, and the first indication information indicates at least one of:

    configuration information of the SMTC;
    an association between an offset and a satellite or cell;
    an association between the SMTC and a satellite or cell;
    an adjusted SMTC for measuring a second satellite or second cell among the plurality of satellites or cells; or
    a priority of a third satellite or third cell among the plurality of satellites or cells.

13. The method of claim 11, wherein the second information comprises ephemeris information broadcasted by the network device, and the ephemeris information is used by the terminal device to determine whether a first condition is satisfied, to adjust the SMTC and/or the first information corresponding to the SMTC when the first condition is satisfied.

14. A terminal device, comprising:
    a first processing module, configured to adjust a synchronization signal and PBCH block (SSB) measurement timing configuration (SMTC) and/or first information corresponding to the SMTC for measurements of a plurality of satellites or cells when a first condition is satisfied, wherein the first condition is associated with the plurality of satellites or cells, and the adjustment comprises an autonomous adjustment by the terminal device or an adjustment based on a network configuration.

15. The terminal device of claim 14, wherein the first information comprises one or more of:

    configuration information of the SMTC;
    an offset of the SMTC when measuring a first satellite or a first cell;
    one or more satellites or cells associated with the SMTC; or
    a satellite or cell to be measured among the plurality of satellites or cells associated with the SMTC.

16. The terminal device of claim 14 or 15, wherein the first processing module is further configured to:

determine whether the first condition is satisfied by detecting information associated with the plurality of satellites or cells; and/or

determine whether the first condition is satisfied based on second information received from a network device.

17. The terminal device of any one of claims 14 to 16, wherein the first condition comprises a dynamic SMTC shifting condition.

18. The terminal device of any one of claims 14 to 17, wherein the first condition comprises at least one of:

detecting that the plurality of satellites or cells are operating out of synchronization;
detecting that speeds of the plurality of satellites or cells are different;
detecting a change in an ephemeris position of at least one of the plurality of satellites or cells;
failing to detect an SSB from at least one of the plurality of satellites or cells;
determining, according to ephemeris information in received broadcast information, that at least one of the plurality of satellites or cells is unable to be measured based on the SMTC; or
receiving first indication information from a network device, the first indication information indicating the terminal device to adjust the SMTC and/or the first information corresponding to the SMTC for measurements of the plurality of satellites or cells.

19. The terminal device of any one of claims 14 to 18, wherein when the terminal device is in an idle state or an inactive state, the first condition comprises at least one of:

detecting that the plurality of satellites or cells are operating out of synchronization;
detecting that speeds of the plurality of satellites or cells are different;
detecting a change in an ephemeris position of at least one of the plurality of satellites or cells;
failing to detect an SSB from at least one of the plurality of satellites or cells; or
determining, according to ephemeris information in received broadcast information, that at least one of the plurality of satellites or cells is unable to be measured based on the SMTC.

20. The terminal device of any one of claims 14 to 19, wherein when the terminal device is in a connected state, the first condition comprises at least one of:

detecting that the plurality of satellites or cells are operating out of synchronization;
detecting that speeds of the plurality of satellites or cells are different;
detecting a change in an ephemeris position of at least one of the plurality of satellites or cells;
failing to detect an SSB from at least one of the plurality of satellites or cells;
determining, according to ephemeris information in received broadcast information, that at least one of the plurality of satellites or cells is unable to be measured based on the SMTC; or
receiving first indication information from a network device, the first indication information indicating the terminal device to adjust the SMTC and/or the first information corresponding to the SMTC for measurements of the plurality of satellites or cells.

21. The terminal device of claim 18 or 20, wherein the first indication information comprises one or more of:

configuration information of the SMTC;
an association between an offset and a satellite or cell;
an association between the SMTC and a satellite or cell;
an adjusted SMTC for measuring a second satellite or second cell among the plurality of satellites or cells; or
a priority of a third satellite or third cell among the plurality of satellites or cells.

22. The terminal device of any one of claims 14 to 21, wherein the first processing module is further configured to:

determine a number of satellites or cells to be measured among the plurality of satellites or cells based on the first information;
determine a measurement time based on the number; and
measure the satellites or cells to be measured based on the measurement time.

23. The terminal device of any one of claims 14 to 21, wherein the first processing module is further configured to:

increase a measurement time for the plurality of satellites or cells; and
measure the plurality of satellites or cells based on the first information and the measurement time.

24. A network device, comprising:
a first communication module, configured to transmit second information, wherein the second information enables a terminal device to adjust a synchronization signal and PBCH block (SSB) measurement timing configuration (SMTC) and/or first information corresponding to the SMTC for measurements of a plurality of satellites or cells.

25. The network device of claim 24, wherein the second information comprises first indication information, and the first indication information indicates at least one of:

configuration information of the SMTC;
an association between an offset and a satellite or cell;
an association between the SMTC and a satellite or cell;
an adjusted SMTC for measuring a second satellite or a second cell among the plurality of satellites or cells; or
a priority of a third satellite or third cell among the plurality of satellites or cells.

26. The network device of claim 24, wherein the second information comprises ephemeris information broadcasted by the network device, and the ephemeris information is used by the terminal device to determine whether a first condition is satisfied, to adjust the SMTC and/or the first information corresponding to the SMTC when the first condition is satisfied.

27. A terminal device, comprising: a processor and a memory, wherein the memory is configured to store a computer program, and the processor is configured to call the computer program stored in the memory and run the computer program to cause the terminal device to perform the method of any one of claims 1 to 10.

28. A network device, comprising: a processor and a memory, wherein the memory is configured to store a computer program, and the processor is configured to call the computer program stored in the memory and run the computer program to cause the network device to perform the method of any one of claims 11 to 13.

29. A chip, comprising a processor, configured to call a computer program from a memory and run the computer program to cause a device installed with the chip to perform the method of any one of claims 1 to 13.

30. A computer-readable storage medium for storing a computer program that, when executed by a device, causes the device to perform the method of any one of claims 1 to 13.

31. A computer program product comprising computer program instructions, wherein the computer program instructions cause a computer to perform the method of any one of claims 1 to 13.

32. A computer program for causing a computer to perform the method of any one of claims 1 to 13.

**100**

**FIG. 1**

Sat1
(At time T2)

Sat1
(At time T1)

Sat2
(At time T1)

Sat2
(At time T2)

Moving

Moving

SMTC periodicity

SMTC1

SMTC1 offset
(offset)

At time T2, both Sat1 and Sat2
cannot be measured in a single
SMTC window

**FIG. 2**

| When a first condition is satisfied, a terminal device adjusts an SMTC and/or first information corresponding to the SMTC for measurements of multiple satellites or cells | S310 |

**FIG. 3**

| The network device transmits second information, where the second information enables a terminal device to adjust an SMTC and/or first information corresponding to the SMTC for measurements of multiple satellites or cells | S410 |

**FIG. 4**

Terminal device 500

First processing module
510

**FIG. 5**

Network device 600

First communication
module 610

**FIG. 6**

Communication Device 700

Memory
720

Processor
710

Transceiver
730

**FIG. 7**

Chip 800

Input Interface
830

Processor
810

Memory
820

Output Interface
840

**FIG. 8**

Communication system 900

500

600

Terminal device

Network device

**FIG. 9**

## INTERNATIONAL SEARCH REPORT

| | International application No. |
|---|---|
| | **PCT/CN2023/107066** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP, IEEE: 测量, 调整, 条件, 满足, 终端, 卫星, 小区, 同步信号块, 配置, 同步, 速度, 星历, 位置, SMTC, measurement, adjustment, condition, satisfaction, terminal, satellite, cell, SSB, configuration, speed, ephemeris, location

### C. DOCUMENTS CONSIDERED TO BE RELEVANT

| Category* | Citation of document, with indication, where appropriate, of the relevant passages | Relevant to claim No. |
|---|---|---|
| X | CN 116420389 A (RAKUTEN MOBILE, INC.) 11 July 2023 (2023-07-11) description, paragraphs [0019]-[0075] and [0091]-[0093] | 1-32 |
| A | US 2022225132 A1 (MEDIATEK SINGAPORE PTE. LTD.) 14 July 2022 (2022-07-14) entire document | 1-32 |
| A | US 2022369249 A1 (HUAWEI TECHNOLOGIES CO., LTD.) 17 November 2022 (2022-11-17) entire document | 1-32 |
| A | NOKIA et al. "On SMTC and Measurements Gaps for NTN" *3GPP TSG-RAN WG2 Meeting #113 Electronic, R2-2100530*, 05 February 2021 (2021-02-05), entire document | 1-32 |
| A | SONY. "Mobility Management in NTN" *3GPP TSG-RAN WG2 Meeting #113 Electronic, R2-2100915*, 05 February 2021 (2021-02-05), entire document | 1-32 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2024** | **15 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | | | International application No. |
| --- | --- | --- | --- | --- | --- | --- |
| Information on patent family members | | | | | | **PCT/CN2023/107066** |

| Patent document cited in search report | | | Publication date (day/month/year) | Patent family member(s) | | | Publication date (day/month/year) |
| --- | --- | --- | --- | --- | --- | --- | --- |
| CN | 116420389 | A | 11 July 2023 | JP | 2023545799 | A | 31 October 2023 |
| | | | | KR | 20230111227 | A | 25 July 2023 |
| | | | | US | 2022232498 | A1 | 21 July 2022 |
| | | | | US | 2023345402 | A1 | 26 October 2023 |
| | | | | EP | 4278681 | A1 | 22 November 2023 |
| | | | | WO | 2022153574 | A1 | 21 July 2022 |
| US | 2022225132 | A1 | 14 July 2022 | TWI | 787039 | B | 11 December 2022 |
| | | | | CN | 114759967 | A | 15 July 2022 |
| US | 2022369249 | A1 | 17 November 2022 | WO | 2021087821 | A1 | 14 May 2021 |
| | | | | EP | 4040847 | A1 | 10 August 2022 |
| | | | | CN | 114600501 | A | 07 June 2022 |

Form PCT/ISA/210 (patent family annex) (July 2022)